# EUROPEAN PATENT SPECIFICATION

(11) **EP 2 492 009 B1**
(45) Date of publication and mention of the grant of the patent: **19.07.2017**
(21) Application number: 10824913.7
(22) Date of filing: 19.10.2010
(51) Int. Cl.: B01J 29/76, B01D 53/94, F01N 3/10, F01N 3/20, F01N 3/28

(54) **EXHAUST GAS PURIFICATION CATALYST AND EXHAUST GAS PURIFICATION APPARATUS USING SAME**
ABGASREINIGUNGSKATALYSATOR UND ABGASREINIGUNGSVORRICHTUNG DAMIT
CATALYSEUR DE PURIFICATION DES GAZ D'ÉCHAPPEMENT ET APPAREIL DE PURIFICATION DES GAZ D'ÉCHAPPEMENT L'UTILISANT

(30) Priority: 21.10.2009 JP 2009242304
(43) Date of publication of application: 29.08.2012
(73) Proprietor: Honda Motor Co., Ltd., Minato-ku Tokyo 107-8556 (JP)
(72) Inventor: ISHIMARU, Shinya, Wako-shi Saitama 351-0193 (JP); ENDO, Tetsuo, Wako-shi Saitama 351-0193 (JP); HOSOE, Hiroki, Wako-shi Saitama 351-0193 (JP); MATSUO, Yuichi, Wako-shi Saitama 351-0193 (JP); YAMAMOTO, Osami, Wako-shi Saitama 351-0193 (JP)
(74) Representative: Weickmann & Weickmann PartmbB
(86) International application number: PCT/JP2010/068323
(87) International publication number: WO 2011/049064

(56) References cited:
- EP-A1- 1 332 787
- EP-A1- 1 889 651
- EP-A2- 1 839 747
- WO-A1-2008/053690
- JP-A- 6 142 519
- JP-A- 8 010 566
- JP-A- 2000 192 811
- JP-A- 2001 182 527
- JP-A- 2004 321 894
- US-A1- 2001 053 340
- US-B1- 6 887 444

## Description

### TECHNICAL FIELD

The present invention relates to an exhaust gas purification catalyst that purifies NOx in the exhaust of an internal combustion engine, and an exhaust gas purification apparatus using this.

### BACKGROUND ART

In recent years, NOx in.the exhaust discharged into the atmosphere from internal combustion engines such as of power generators and vehicles have been viewed as a problem from the perspective of harmful emission suppression. NOx is a causative substance of acid rain and photochemical smog, and the emissions thereof have been regulated globally.

However, in internal combustion engines such as diesel engines and gasoline lean burn engines, lean combustion is carried out; therefore, O₂ is contained in abundance in the exhaust thereof. Among the harmful components contained in exhaust, for NOx, purification is performed by a reducing reaction; however, the purification of NOx is not easy in exhaust containing O₂ in abundance.

As technology for purifying NOx in exhaust containing O₂ in abundance, technology has been known that employs an exhaust gas purification catalyst that captures NOx in the exhaust when the air/fuel ratio of the exhaust is a lean state, and releases the NOx thus captured when the air/fuel ratio of the exhaust is a rich state. According to this technology, when the air/fuel ratio of the exhaust is a lean state, NOx in the exhaust is captured in the exhaust gas purification catalyst, and the NOx thus captured in the catalyst is released from the catalyst and reduced and purified when the air/fuel ratio of the exhaust is a rich state.

As the above-mentioned exhaust gas purification catalyst, a catalyst is exemplified that is made by combining CeO₂ and Pt as NOx capturing materials and a solid acid such as a zeolite as an NH₃ capturing material. With this catalyst, first, when the air/fuel ratio of the exhaust is a lean state, NO accounting for a majority of the NOx in the exhaust is oxidized to NO₂ using O₂, and is captured in the form of NO₂ (refer to the following formulas (1) to (3)). Next, after the air/fuel ratio of the exhaust is established in a rich state and a state is entered in which O₂ is scarce in the exhaust, CO and H₂O contained in the exhaust is allowed to react to cause H₂ to be produced (refer to the following formula (4)). Furthermore, the H₂ thus produced and NOx are allowed to react to convert the NOx captured into NH₃, which is stored on the catalyst (refer to the following formula (5)). Then, when the air/fuel ratio of the exhaust is established as a lean state again, the NOx is efficient reduced and purified by allowing the NH₃ thus stored to react with NOx in the exhaust (refer to the following formulas (6) to (8)).
[Chem. 1]

NO → NO(ad) Formula(1)

2NO+O₂ → 2NO₂ (ad) Formula (2)

NO₂ → NO₂ (ad) Formula (3)

CO+H₂O → H₂+CO₂ Formula (4)

5H₂+2NO → 2NH₃(ad)+2H₂O Formula (5)

4NH₃+4NO+O₂ → 4N₂+6H₂O Formula (6)

2NH₃+NO₂+NO → 2N₂+3H₂O Formula (7)

8NH₃+6NO₂ → 7N₂+12H₂O Formula (8)

(In the formulas, (ad) represents having been captured in the catalyst. The reactions represented by formulas (1) to (3) and formulas (6) to (8) are reactions progressing when the air/fuel ratio of the exhaust is a lean state, and the reactions represented by formulas (4) and (5) are reactions progressing when the air/fuel ratio of the exhaust is a rich state. The reaction represented by formula (4) is the water-gas shift reaction, and the reaction represented by formula (7) has a higher reactivity than the reaction represented by formula (6).)

According to the above-mentioned exhaust gas purification catalyst, ceria is used as the NOx capturing material; therefore, a high NOx purification rate is obtained in a lower temperature range than conventionally, and even in a case of being poisoned by SOx, it can be regenerated at low temperature.

In addition, according to the above-mentioned exhaust gas purification catalyst, it is possible to suppress poisoning of metals by long chain-length HCs contained in abundance in the exhaust of diesel engines in particular, by imparting an HC capturing ability to the solid acid that is the NH₃ capturing material, whereby a decline in the NOx purification rate can be suppressed.

However, with the above-mentioned exhaust gas purification catalyst, in a case of the zeolite and the Pt and CeO₂ coexisting in the same layer, or a case of being adjacent between layers, there has been a problem in that the NOx purification rate will decline due to these coming together to cause some interactions under high temperature conditions. In particular, the decline in the NOx purification rate was remarkable after S-purge execution to cause the catalyst to rise in temperature up to a predetermined temperature of at least about 650°C in order to remove SOx captured in the catalyst.

Therefore, in order to solve the above-mentioned problem, for example, an exhaust gas purification catalyst has been disclosed that arranges a third catalyst layer containing a NOx reducing material and a HC capturing material such as zeolite at a top-most surface, arranges a first catalyst layer containing noble metal such as Pt in a lowest layer, as well as providing a second catalyst layer separating this third catalyst layer and first catalyst layer between the two layers (refer to Patent Document 1).

According to this exhaust gas purification catalyst, it is regarded as being possible to separate the noble metal such as Pt and the HC capturing material such as zeolite with the second catalyst layer, whereby a decline in the NOx purification rate caused by interaction of the two during high temperatures can be suppressed.

In addition, an exhaust gas purification catalyst has been disclosed that sequentially provides a first layer with a main component of activated alumina containing Pt and Pd, and a second layer with a main component of activated alumina containing Rh, and further provides a coated layer with zeolite ion exchanged with Cu, Cr, Nd, Y, Co, Zn, Ce, Pr or La as a main component on the second layer (refer to Patent Document 2).

According to this exhaust gas purification catalyst, it is regarded as being possible to suppress alloying between the Pt and Pd in the first layer and the Rh in the second layer due to using activated alumina as a support in the first layer and the second layer, whereby the decline in the NOx purification rate can be suppressed.
Patent Document 1: Japanese Unexamined Patent Application Publication No. H11-226402
Patent Document 2: Japanese Unexamined Patent Application Publication No. H5-285391

EP 1 332 787 A1 and US 6,887,444 B1 disclose exhaust gas catalysts with a first catalyst layer that contains Pt; a second catalyst layer containing a zeolite; and an intermediate layer that is provided between the first catalyst layer and the second catalyst layer, wherein the intermediate layer contains as a main component at least one kind of oxide selected from the group consisting of CeO₂, ZrO₂ and a complex oxide including Ce and Zr, and contains either one or both Rh and Pd. IN US 6887 444 B2, the NOx reducing layer is exposed to exhaust gas, and the HC absorbing zeolite layer is in direct contact with the cordierite carrier substrate. In EP 1 332 787 A1, the catalyst layer contains Pt and Rh is exposed to the exhaust gas and the zeolite containing layer contacts the honeycomb carrier, while in a comparative example, the Pt and Rh containing layer is covered by a zeolite containing layer exposed to the exhaust gas.

### DISCLOSURE OF THE INVENTION

### Problems to be Solved by the Invention

However, although the second catalyst layer is being provided in order to separate the noble metal such as Pt and the HC capturing material such as zeolite, and avoid a decline in the NOx purification rate due to interaction of the two, this second catalyst layer fundamentally does not function as a catalyst. As a result, with the exhaust gas purification catalyst of Patent Document 1, a decline in the flowability of the exhaust has been incurred, whereby a high NOx purification rate has not been obtained.

In addition, although the support of Rh contained in the second layer is activated alumina in Patent Document 2, activated alumina tends to form a complex oxide with Rh. As a result, with the exhaust gas purification catalyst of Patent Document 2, the Rh cannot exhibit sufficient NOx reducing ability, and thus a high NOx purification rate has not been obtained.

The present invention has been made taking the above into account, and an object thereof is to provide an exhaust gas purification catalyst whereby a high NOx purification rate is obtained compared to conventionally, and an exhaust gas purification apparatus using this.

### Means for Solving the Problems

In order to achieve the above-mentioned object, the invention provides an exhaust gas purification catalyst and apparatus according to claims 1 and 2.

In a first aspect of the invention the exhaust gas purification catalyst is provided in an exhaust channel of an internal combustion engine that captures NOx in exhaust when an air/fuel ratio of exhaust is a lean state, and releases and reductively purifies NOx thus captured when the air/fuel ratio of exhaust is a stoichiometric state or rich state.

Since the Pt and zeolite can thereby be separated, a decline in the NOx purification rate due to interaction of the two can be avoided, along with being able to make the intermediate layer function as a catalyst, and thus being able to avoid a decline in the NOx purification rate.

In addition, in the intermediate layer, since Rh, which has NOx reducing ability, is loaded on at least one kind of oxide selected from the group consisting of CeO₂, ZrO₂, and complex oxides including Ce and Zr, the Rh can sufficiently exhibit NOx reducing ability without a complex oxide with alumina being formed as is conventionally. In particular, the Rh exhibits high

NOx reducing ability not limited to when the air/fuel ratio of the exhaust is a rich state, but also when the stoichiometric state, and thus a high NOx purification rate is obtained under a wide air/fuel ratio window.

In addition, according to the first aspect of the invention, the second catalyst layer consists of zeolite imparted with HC capturing ability and an inorganic binder.

It is thereby possible to suppress poisoning of metals Pt and Rh by long chain-length HCs that are abundantly contained in the exhaust of diesel engines, etc. As a result, it is possible to sufficiently exhibit NOx capturing ability and NOx reducing ability, and thus a high NOx purification rate is obtained.

According to a second aspect of the invention, in the exhaust gas purification catalyst as described in the first aspect of the invention, the first catalyst layer contains as a main component at least one kind of oxide selected from the group consisting of CeO₂, ZrO₂, Al₂O₃, and a complex oxide including Ce and Zr.

According to the second aspect of the invention, the first catalyst layer is configured by loading Pt on at least one kind of oxide selected from the group consisting of CeO₂, ZrO₂, Al₂O₃, and complex oxides including Ce and Zr.
A high NOx capturing ability is thereby exhibited in a low temperature range, and a high NOx purification rate is obtained in a wide temperature range.

According to a third aspect of the invention, in the exhaust gas purification catalyst as described in the first or second aspect of the invention, the exhaust gas purification catalyst is loaded on a support for the catalyst, a total loading amount of the first catalyst layer, the second catalyst layer and the intermediate layer is no more than 450 g/L per unit volume of the support for the catalyst, and a loading amount of the intermediate layer is no more than 100g/L per unit volume of the support for the catalyst.

According to the third aspect of the invention, the total loading amount of the first catalyst layer, second catalyst layer and intermediate later is set to no more than 450 g/L per unit volume of support, and the loading amount of the intermediate layer is set to no more than 100 g/L per unit volume of support.

The NOx capturing ability and NOx reducing ability can thereby be sufficiently exhibited without the flowability of exhaust being inhibited, and thus a high NOx purification rate is obtained.

According to a fourth aspect of the invention, an exhaust gas purification apparatus (e.g., the exhaust gas purification apparatus 10 described later) includes the exhaust gas purification catalyst of the invention(e.g., the LNC 11 described later) provided in an exhaust channel (e.g., the exhaust channel 2 described later) of an internal combustion engine (e.g., the engine 1 described later), and purifying NOx in exhaust by periodically changing an air/fuel ratio of exhaust of the internal combustion engine to a lean state, and a stoichiometric state or rich state.

According to the fourth aspect of the invention, the exhaust gas purification catalyst according to the first aspect of the invention is provided inside the exhaust channel to an exhaust gas purification apparatus that purifies NOx in the exhaust by causing the air/fuel ratio of the exhaust to periodically change to a lean state and the stoichiometric state or rich state.

The exhaust gas purification catalyst according to the first aspect of the invention captures NOx in the exhaust when the air/fuel ratio of the exhaust is a lean state, and releases, then reductively purifies the NOx thus captured when the air/fuel ratio of the exhaust is the stoichiometric state or rich state. As a result, according to the fourth aspect of the invention, the effects of the aforementioned first aspect of the invention are maximally exhibited by applying the exhaust gas purification catalyst according to the first aspect of the invention to an exhaust gas purification apparatus that performs lean/rich control of the air/fuel ratio of the exhaust.

According to a fifth aspect of the invention, the exhaust gas purification apparatus of the fourth aspect further includes a SOx removal means (e.g., the DOC 12 and execution of post injection described later) for removing SOx captured in the first catalyst layer by causing the exhaust gas purification catalyst to rise in temperature up to a predetermined temperature of at least 650°C.

According to the fifth aspect of the invention, a SOx removal means is further provided for removing SOx captured in the first catalyst layer, by causing the exhaust gas purification catalyst to rise in temperature up to a predetermined temperature of at least 650°C.

Although a high temperature of at least 650°C is necessary in order to remove at least 90% of the SOx captured in the catalyst, conventionally, in a case of causing the catalyst to rise in temperature up to a predetermined temperature of at least 650°C, a decline in the NOx purification rate has been incurred, caused by the interaction between the Pt and zeolite. In contrast, according to the fifth aspect of the invention, it is possible to execute SOx removal while avoiding a decline in the NOx purification rate caused by interaction between the Pt and zeolite, since the exhaust gas purification catalyst in which the intermediate layer is provided to separate the Pt and zeolite is used.

### Effects of the Invention

According to the present invention, it is possible to provide an exhaust gas purification catalyst whereby a high NOx purification rate is obtained compared to conventionally, and an exhaust gas purification apparatus employing this.

### BRIEF DESCRIPTION OF THE DRAWINGS

FIG. 1 is a schematic block diagram of an exhaust gas purification apparatus according to an embodiment of the present invention;
FIG. 2 is a graph showing a relationship between an S-purge temperature and an S-purge rate; and
FIG. 3 is a graph showing a relationship between the S-purge temperature and NOx purification rate for an Example and Comparative Example.

### EXPLANATION OF REFERENCE NUMERALS

- 1: Engine (internal combustion engine)
- 2: Exhaust channel
- 10: Exhaust gas purification apparatus
- 11: LNC (exhaust gas purification catalyst)
- 12: DOC (SOx removal means)

### PREFERRED MODE FOR CARRYING OUT THE INVENTION

Hereinafter, embodiments of the present invention will be explained in detail while referencing the drawings.

### Exhaust Gas Purification Catalyst

An exhaust gas purification catalyst according to the present embodiment is provided in an exhaust channel of an internal combustion engine, and is an exhaust gas purification catalyst that captures NOx in the exhaust when the air/fuel ratio of exhaust is a lean state, and releases and reductively purifies the NOx thus captured when the air/fuel ratio of exhaust is a stoichiometric state or rich state.

Herein, "capturing" NOx in the present invention has a meaning including any cases of adsorbing, absorbing and occluding NOx.

The exhaust gas purification catalyst according to the present embodiment is configured by a first catalyst layer having NOx capturing ability, an intermediate layer having NOx reducing ability, and a second catalyst layer containing zeolite being sequentially layered on a support. In other words, the exhaust gas purification catalyst according to the present embodiment is an exhaust gas purification catalyst having a three-layer structure.

The support is not particularly limited, and a conventionally known support can be used thereas. As the material thereof, one made or metal or made of cordierite can be used, and as the form thereof, one of a honeycomb shape can be used. Preferably, a honeycomb support made of cordierite is used.

The first catalyst layer is formed on the support and is arranged as the lowest layer. The first catalyst layer has NOx capturing ability and is configured to contain noble metal being Pt. The noble metal amount is
0.1 g/L to 20 g/L per unit volume of support for the catalyst, and is more preferably 0.3 g/L to 10 g/L. In a case of the noble metal amount being less than 0.1 g/L, sufficient NOx capturing ability will not be obtained, and in a case of the noble metal amount exceeding 20 g/L, no further improvement in the NOx capturing ability will be obtained, and is disadvantageous from a cost perspective.

In addition, the first catalyst layer contains as a main component at least one kind of oxide selected from the group consisting of CeO₂, ZrO₂, Al₂O₃, and complex oxides including Ce and Zr. These oxides function as support materials for the above-mentioned noble metal, and the noble metal Pt is loaded on these oxides. In addition, among the above-mentioned oxides, CeO₂ and ZrO₂ function as oxygen storage materials (Oxygen Storage Component (hereinafter referred to as "OSC material").

It should be noted that the first catalyst layer may contain an alkali metal such as Na, K and Cs, and an alkali earth metal such as Mg, Sr and Ba, in addition to the above-mentioned noble metal. These alkali metals and alkali earth metals are loaded on the above-mentioned oxides.

The loading amount of the first catalyst layer is 50 g/L to 400 g/L per unit volume of support. In a case of the loading amount of the first catalyst layer being less than 50 g/L, the NOx capturing material will be deficient, and sufficient NOx capturing ability will not be obtained. In addition, in a case of the loading amount of the
first catalyst layer exceeding 400 g/L, the volume through which the exhaust can flow through decreases and the flow rate of the exhaust increases, and thus the flowability of exhaust will decline such as; therefore, the NOx capturing ability will not be able to be sufficiently exhibited.

The intermediate layer is arranged between the first catalyst layer and the second catalyst layer, and separates the first catalyst layer and the second catalyst layer. The intermediate layer has NOx reducing ability, and is configured to contain noble metal Rh. The noble metal amount is 0.1 g/L to 20 g/L per unit volume of support for the catalyst, and is preferably 0.3 g/L to 10 g/L. In a case of the noble metal amount being less than 0.1 g/L, sufficient NOx reducing ability will not be obtained, and in a case of the noble metal amount exceeding 20 g/L, no further improvement in NOx reducing ability will be obtained, and is disadvantageous from a cost perspective.

In addition, the intermediate layer contains as a main component at least one kind of oxide selected from the group consisting of CeO₂, ZrO₂, and complex oxides including Ce and Zr. These oxides function as support materials of Rh, and the Rh are loaded on these oxides. In addition, similarly to the first catalyst layer, among the above-mentioned oxides, CeO₂ and ZrO₂ function as oxygen storage materials (Oxygen Storage Component, hereinafter referred to as "OSC material").

The loading amount of the intermediate layer is 10 g/L to100 g/L per unit volume of support for the catalyst. In a case of the loading amount of the intermediate layer exceeding 100 g/L, the flow of exhaust to a NOx capturing layer will not be sufficient, and the function of the catalyst will not be able to be sufficiently exhibited.

In a case of the loading amount of the intermediate layer being less than 10 g/L, it will not be possible to sufficiently separate the first catalyst layer containing Pt and the second catalyst layer containing zeolite.

The second catalyst layer is formed on the intermediate layer, and is arranged as the top-most layer. The second catalyst layer contains zeolite having HC capturing ability, and has NH3 capturing ability due to the zeolite. As the zeolite, it is possible to use at least one kind of zeolite selected from the group consisting of β-type zeolite, MFI-type zeolite, Y-type zeolite, SZR-type zeolite and FER-type zeolite. The zeolite is arrived at by performing ion-exchange treatment with at least one selected from the group consisting of H, Fe, Cu, V, Cs and Ag on these various zeolites.

The loading amount of the second catalyst layer is 10 g/L to 100 g/L per unit volume of support for the catalyst. In a case of the loading amount of the second layer exceeding 100 g/L, the flow of exhaust to the first catalyst layer having NOx capturing ability and the intermediate layer having NOx reducing ability will not be sufficient, and it will not be possible to sufficiently exhibit the NOx capturing ability and NOx reducing ability.

In a case of the loading amount of the second catalyst layer being less than 10 g/L, it will not be possible to sufficiently exhibit the NH₃ capturing ability possessed by the zeolite, and a high NOx purification rate will not be obtained.

It should be noted that the total loading amount of the first catalyst layer, second catalyst layer and intermediate layer is no more than 450 g/L per unit volume of support. In a case of the total loading amount exceeding 450 g/L, the volume through which the exhaust can flow through decreases and the flow rate of the exhaust increases, and thus the flowability of the exhaust will decline; therefore, the catalyst function will not be able to be sufficiently exhibited.

For the exhaust gas purification catalyst according to the present embodiment having the above such configuration, the production method thereof is not particularly limited, and is produced by a conventional known production method. Preferably, it is produced by a wash-coating method.

For example, a slurry containing the constituent materials of the first catalyst layer is prepared, and the first of the first catalyst layer is prepared, and the first
catalyst layer is formed on the support by way of a wash-coating method using this slurry. Next, a slurry containing the constituent materials of the intermediate layer is prepared, and the intermediate layer is formed on the first catalyst layer by way of a wash-coating method using this slurry. Finally, a slurry containing the constituent materials of the second catalyst layer is prepared, and the second catalyst layer is formed on the intermediate layer by way of a wash-coating method using this slurry. The exhaust gas purification catalyst of a three-layer structure according to the present embodiment is thereby obtained.

It should be noted that the loading amount of catalyst can be adjusted by adjusting the content of the constituent materials in each slurry, and adjusting the wash-coat amounts.

Next, the NOx purification operation of the exhaust gas purification catalyst according to the present embodiment will be explained.

First, when the air/fuel ratio of the exhaust is a lean state, O₂ in the exhaust and NO accounting for a majority of the NOx pass through the second catalyst layer and intermediate layer to reach the first catalyst layer, and generates NO₂ by reacting according to the action of Pt contained in the first catalyst layer. The NO₂ thus generated is captured by the CeO₂ or ZrO₂ contained in the first catalyst layer.

Next, when the air/fuel ratio of the exhaust is made the stoichiometric state or a rich state, CO and H₂O in the exhaust react and CO₂ and H₂ form. In addition, HC in the exhaust reacts with the H₂O, and H₂ forms along with CO and CO₂. Furthermore, NOx in the exhaust and NOx captured in the first catalyst layer (NO₂ and NO), and the formed H₂ react by way of the action of Rh or Pd, and NH₃ and H₂O form. Herein, the NH₃ thus formed is captured by the zeolite contained in the second catalyst layer in the form of NH₄⁺.

Next, when the air/fuel ratio of the exhaust is made a lean state again, NOx in the exhaust is captured in the first catalyst layer, and the NH₃ captured in the zeolite in the second catalyst layer and NOx and O₂ in the exhaust react, and N₂ and H₂O form.

As a result, the exhaust gas purification catalyst according to the present embodiment reductively purifies NOx in the exhaust.

Next, the effects of the exhaust gas purification catalyst according to the present embodiment will be explained.

According to the exhaust gas purification catalyst according to the present embodiment, the intermediate layer is provided between the first catalyst layer containing Pt and the second catalyst layer containing zeolite, and this intermediate layer is configured to contain a predetermined oxide on which either one or both of Rh and Pd have been loaded.

Since the Pt and zeolite can thereby be separated, a decline in the NOx purification rate due to interaction of the two can be avoided, along with being able to make the intermediate layer function as a catalyst, and thus being able to avoid a decline in the NOx purification rate. In addition, in the intermediate layer, since Rh, which has NOx reducing ability, is loaded on at least one kind of oxide selected from the group consisting of CeO₂, ZrO₂, and complex oxides including Ce and Zr, the Rh can sufficiently exhibit NOx reducing ability without a complex oxide being formed as is conventionally. In particular, the Rh exhibit high NOx reducing ability not limited to when the air/fuel ratio of the exhaust is a rich state, but also when the stoichiometric state, and thus a high NOx purification rate is obtained under a wide air/fuel ratio window.
In addition, according to the exhaust gas purification catalyst according to the present embodiment, the second catalyst layer is configured to contain zeolite imparted with HC capturing ability.
It is thereby possible to suppress poisoning of metals such as Pt, Rh and Pd by long chain-length HCs that are abundantly contained in the exhaust of diesel engines, etc. As a result, it is possible to sufficiently exhibit NOx capturing ability and NOx reducing ability, and thus a high NOx purification rate is obtained.
In addition, according to the exhaust gas purification catalyst according to the present embodiment, the first catalyst layer is configured by loading Pt on at least one kind of oxide selected from the group consisting of CeO₂, ZrO₂, Al₂O₃, and complex oxides including Ce and Zr.

A high NOx capturing ability is thereby exhibited in a low temperature range, and a high NOx purification rate is obtained in a wide temperature range.

In addition, according to the exhaust gas purification catalyst according to the present embodiment, the total loading amount of the first catalyst layer, second catalyst layer and intermediate later is set to no more than 450 g/L per unit volume of support, and the loading amount of the intermediate layer is set to no more than 100 g/L per unit volume of support.

The NOx capturing ability and NOx reducing ability can thereby be sufficiently exhibited without the flowability of exhaust being inhibited, and thus a high NOx purification rate is obtained.

### Exhaust Gas Purification Apparatus

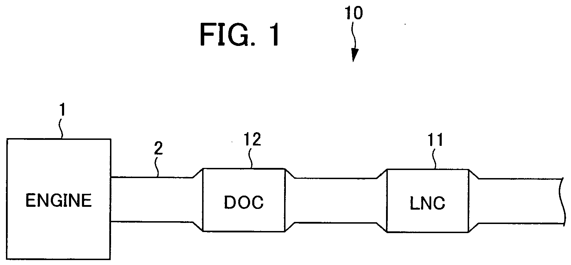

An exhaust gas purification apparatus 10 according to the present embodiment purifies NOx in exhaust by periodically causing the air/fuel ratio of exhaust of an engine 1 to change to a lean sate, and a stoichiometric state or rich state. A schematic block diagram of the exhaust gas purification apparatus 10 for an internal combustion engine (hereinafter referred to as "engine") 1 according to the present embodiment is shown in FIG. 1. As shown in FIG. 1, the exhaust gas purification apparatus 10 according to the present embodiment includes an exhaust air/fuel ratio control means (not illustrated) for controlling the air/fuel ratio of exhaust discharged from the engine 1, an LNC 11 as the exhaust gas purification catalyst provided in an exhaust channel 2, and an oxidation catalyst (hereinafter referred to as "DOC") 12 as a SOx removal means for removing SOx captured by the LNC 11.

In the present embodiment, a diesel engine that directly injects fuel into the combustion chamber of each cylinder is employed as the engine 1. With a diesel engine, lean combustion is executed, and the air/fuel ratio of the exhaust is usually a lean state.

The exhaust air/fuel ratio control means causes the air/fuel ratio of exhaust flowing through the exhaust channel 2 into the LNC 11 to periodically change to a lean state, and the stoichiometric state or rich state. More specifically, in addition to the execution of post injection (fuel injection during the exhaust stroke or expansion stroke not contributing to combustion) and rich combustion (combustion in which the main injection amount is increased), the air/fuel ratio of the exhaust is made to periodically change from the usually lean state to the stoichiometric state or rich state by providing a fuel reformer and introducing a reducing gas such as H₂ produced by this fuel reformer thereinto.

The LNC 11 captures NOx in the exhaust when the air/fuel ratio of the exhaust is a lean state, and releases and reductively purifies the NOx thus captured when the air/fuel ratio of the exhaust is the stoichiometric state or rich state. In the present embodiment, the exhaust gas purification catalyst according to the aforementioned embodiment is used as the LNC 11.

The SOx removal means removes SOx captured by the first catalyst layer of the LNC 11 by causing the LNC 11 to rise in temperature up to a predetermined temperature of at least 650°C. In the present embodiment, by arranging the DOC 12 as the SOx removal means in the exhaust channel 2 on an upstream side of the LNC 11 and executing post injection, the temperature of the exhaust is made to rise through the oxidation exothermic reaction in the DOC 12, and the SOx captured in the LNC 11 is removed.

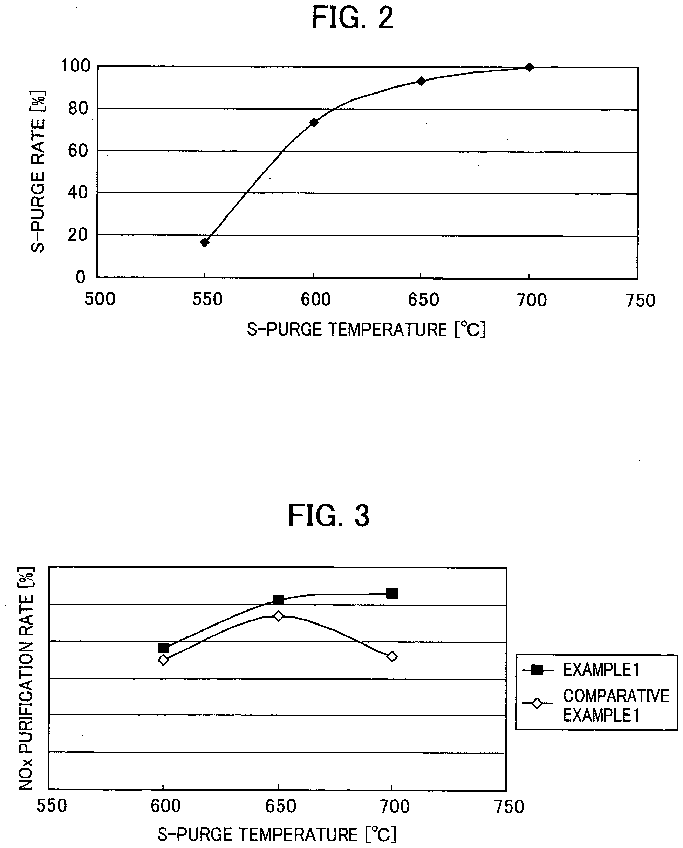

Herein, the relationship between the S-purge temperature and S-purge rate when executing S-purge on the LNC 11 having captured SOx is shown in FIG. 2. For the SOx captured in the LNC 11, it is understood that at least about 90% of the SOx is removed by setting the S-purge temperature to at least 650°C, as shown in FIG. 2.

Next, the effects of the exhaust gas purification apparatus 10 according to the present embodiment will be explained.

According to the exhaust gas purification apparatus 10 according to the present embodiment, the LNC 11, which is the exhaust gas purification catalyst according to the above-mentioned embodiment, is provided inside the exhaust channel 2 to an exhaust gas purification apparatus that purifies NOx in the exhaust by causing the air/fuel ratio of the exhaust to periodically change to a lean state and the stoichiometric state or rich state.

The LNC 11 captures NOx in the exhaust when the air/fuel ratio of the exhaust is a lean state, and releases, then reduces and purifies the NOx thus captured when the air/fuel ratio of the exhaust is the stoichiometric state or rich state. As a result, the effects of the LNC 11 are maximally exhibited by applying the LNC 11 to an exhaust gas purification apparatus that performs lean/rich control of the air/fuel ratio of the exhaust.

In addition, according to the exhaust gas purification apparatus 10 according to the present embodiment, the DOC 12 is further provided as a SOx removal means for removing SOx captured in the first catalyst layer of the LNC 11, by causing the LNC 11 to rise in temperature up to a predetermined temperature of at least 650°C.

Although a high temperature of at least 650°C is necessary in order to remove at least 90% of the SOx captured in the LNC, conventionally, in a case of causing the LNC to rise in temperature up to a predetermined temperature of at least 650°C, a decline in the NOx purification rate has been incurred, caused by the interaction between the Pt and zeolite. In contrast, according to the present embodiment, it is possible to execute SOx removal while avoiding a decline in the NOx purification rate caused by interaction between the Pt and zeolite, since the LNC 11 in which the intermediate layer is provided to cause the Pt and zeolite to be separated is used.

The first catalyst layer having NOx capturing ability that contains Pt is arranged as the lowest layer, and the second catalyst layer having NH₃ capturing ability that contains zeolite is arranged as the top-most layer in the exhaust gas purification catalyst according to the above-mentioned embodiment.

In addition, an inorganic binder such as Al₂O₃ and SiO₂ is contained as appropriate in the respective layers of the first catalyst layer, second catalyst layer and intermediate layer.

In addition, although the DOC 12 is provided in the exhaust channel 2 on an upstream side of the LNC 11 as the SOx removal means, and then post injection or rich combustion is executed with the exhaust gas purification apparatus 10 according to the above-mentioned embodiment, it is not limited thereto. If an LNC capable of removing SOx at low temperature, it is not necessary to provide the DOC, and SOx can be removed by executing fuel injection control such as combustion rich with only the LNC.

### EXAMPLES

Next, examples of the present invention will be explained; however, the present invention is not to be limited to these examples.

### Example 1

Each slurry containing the constituent materials of the respective layers of the first catalyst layer, intermediate layer and second catalyst layer shown in Table 1 was prepared. Using each of the prepared slurries, a wash-coating method was applied to form layers in the order of the first catalyst layer, intermediate layer and second catalyst layer on a honeycomb support made of cordierite to obtain the exhaust gas purification catalyst of Example 1. The loading amount of each constituent material was set as shown in Table 1.

**[Table 1]**

| Example 1 | Composition | Loading amount(g/L) |
|---|---|---|
| Second catalyst layer | Fe,Ce,La ion exchanged *β-*zeolite | 25 |
| | binder | 3 |
| Intermediate layer | Rh | 0.5 |
| | Ce-Zr-Ox | 40 |
| First catalyst layer | Pt | 4.4 |
| | CeO₂ | 15 |
| | Al₂O₃ | 100 |
| | Ce-Zr-Ox | 155 |

### Comparative Example 1

The exhaust gas purification catalyst of Comparative Example 1 including the first catalyst layer, intermediate layer and second catalyst layer shown in Table 2 was obtained according to the same preparation method as Example 1.

**[Table 2]**

| Comparative Example 1 | Composition | Loading amount (g/L) |
|---|---|---|
| Second catalyst layer | Fe,Ce,La ion exchanged β-zeolite | 25 |
| | Al₂O₃ | 2 |
| | binder | 3 |
| Intermediate layer | Pt | 0.9 |
| | Rh | 0.5 |
| | Ce-Zr-Ox | 90 |
| | Al₂O₃ | 20 |
| First catalyst layer | Pt | 3.5 |
| | CeO₂ | 15 |
| | Al₂O₃ | 80 |
| | Ce-Zr-Ox | 105 |

### Evaluation

Exhaust of a diesel engine was allowed to flow through the respective exhaust gas purification catalysts obtained in Example 1 and Comparative Example 1 at the same conditions, and SOx was forcibly captured, after which S-purge was conducted. The S-purge was conducted at the three levels of S-purge temperature of 600°C, 650°C and 700°C.

The exhaust of the diesel engine was allowed to flow through the respective exhaust gas purification catalysts after conducting S-purge, and the results of examining the NOx purification rate are shown in FIG. 3. FIG. 3 shows the relationship between the temperature of the S-purge and the NOx purification rate after conducting S-purge. It was found that, since the intermediate layer was provided in Example 1 to separate the Pt and zeolite, interaction between the Pt and zeolite was avoided, whereby the NOx purification rate improved as the S-purge temperature was raised, as shown in FIG. 3.

On the other hand, it was found that, since the second catalyst layer containing zeolite and the intermediate layer containing Pt are adjacent in Comparative Example 1, the NOx purification rate declined at an S-purge temperature of 650°C or higher due to the interaction between the zeolite and Pt.

From this result, it has been confirmed that, by providing an intermediate layer to separate the Pt and zeolite, thereby avoiding interaction between the two, it is possible to avoid a decline in the NOx purification rate, even in a case of the catalyst having been exposed to high temperature conditions such as of the S-purge.

## Claims

1. An exhaust gas purification catalyst (11) to be provided in an exhaust channel (2) of an internal combustion engine (1) that captures NOx in exhaust when an air/fuel ratio of exhaust is a lean state, and adapted to release and reductively purify NOx thus captured when the air/fuel ratio of exhaust is a stoichiometric state or rich state, the catalyst (11) consisting of:
a first catalyst layer formed in direct contact with a support for the catalyst (11), the first catalyst layer consisting of Pt and a support material for the Pt, wherein the first catalyst layer is adapted to capture NOx, wherein the support material for the Pt is at least one kind selected from the group consisting of CeO₂, ZrO₂, Al₂O₃ and complex oxides including Ce and Zr, wherein a loading amount of the Pt is 0,1 g/L to 20 g/L per unit volume of the support for the catalyst (11);
a second catalyst layer consisting of one at least one kind of zeolite selected from the group consisting of β-type zeolite, MFI-type zeolite, Y-type zeolite, SZR-type zeolite and FER-type zeolite, and an inorganic binder, wherein the zeolite is ion-exchanged zeolite arrived at by performing ion-exchanged treatment with at least one kind selected from the group consisting of H, Fe, Cu, V, Cs and Ag, wherein the second catalyst layer is adapted to capture HC; and
an intermediate layer formed between the first catalyst layer and the second catalyst layer; the intermediate layer consisting of Rh and a support material for the Rh, wherein the support material for the Rh is at least one kind selected from the group consisting of CeO₂, ZrO₂, and complex oxides including Ce and Zr, wherein the intermediate layer is adapted to reduce NOx, wherein a loading amount of the Rh is 0,1 g/L to 20 g/L per unit volume of the support for the catalyst (11),
wherein the first catalyst layer, the intermediate layer and the second catalyst layer are arranged on each other in this order, such that in lean state of exhaust gas, O₂ and NO pass through the second catalyst layer and intermediate layer to reach the first catalyst layer,
wherein a total loading amount of the first catalyst layer, the second catalyst layer and the intermediate layer is no more than 450 g/L per unit volume of the support for the catalyst (11), and
wherein a loading amount of the first catalyst layer is 50 g/L to 400 g/L, a loading amount of the the second catalyst layer is 10 g/L to 100 g/L and a loading amount of the intermediate layer is 10 g/L to 100 g/L per unit volume of the support for the catalyst (11).

2. An exhaust gas purification apparatus (10) comprising an exhaust gas purification catalyst (11) according to claim 1 to be provided in an exhaust channel (2) of an internal combustion engine (1), and adapted to purify NOx in exhaust by periodically changing an air/fuel ratio of exhaust of the internal combustion engine (1) to a lean state, and a stoichiometric state or rich state.

3. An exhaust gas purification apparatus (10) according to claim 2, further comprising a SOx removal means (12) for removing SOx captured in the first catalyst layer from the exhaust gas purification catalyst (11) by causing the exhaust gas purification catalyst (11) to rise in temperature up to a predetermined temperature of at least 650° C.

## Patentansprüche

1. Abgasreinigungskatalysator (11) zum Vorsehen in einem Abgaskanal (2) eines Verbrennungsmotors (1), der NOx im Abgas auffängt, wenn ein Luft-/Kraftstoffverhältnis vom Abgas im mageren Zustand ist, und dazu ausgelegt ist, das so aufgefangene NOx freizusetzen und reduktiv zu reinigen, wenn das Luft-/Kraftstoffverhältnis vom Abgas im stöchiometrischen Zustand oder fetten Zustand ist, wobei der Katalysator (11) besteht aus:
einer ersten Katalysatorschicht, die in direktem Kontakt mit einem Träger für den Katalysator (11) ausgebildet ist, wobei die erste Katalysatorschicht aus Pt und einem Trägermaterial für das Pt besteht, wobei die erste Katalysatorschicht zum Auffangen von NOx ausgelegt ist, wobei das Trägermaterial für das Pt zumindest eine Art ausgewählt aus der Gruppe ist, die aus CeO₂, ZrO₂, AlO₃ sowie Ce und Zrenthaltenden Komplexoxiden besteht, und wobei eine Beladungsmenge des Pt 0,1 g/L bis 20g/L pro Volumeneinheit des Trägers für den Katalysator (11) ist;
eine zweite Katalysatorschicht, die aus zumindest einer Art von Zeolith, ausgewählt aus der Gruppe aus β-Zeolith, MFI-Zeolith, Y-Zeolith, SZR-Zeolith und FER-Zeolith, und einem anorganischen Bindemittel besteht, wobei das Zeolith Ionen-ausgetauschtes Zeolith ist, erhalten durch Ausführung einer Ionenaustauschbehandlung mit zumindest einer Art ausgewählt aus der Gruppe, die aus H, Fe, Cu, V, Cs und Ag besteht, wobei die zweite Katalysatorschicht zum Fangen von HC ausgelegt ist; und
eine Zwischenschicht, die zwischen der ersten Katalysatorschicht und der zweiten Katalysatorschicht ausgebildet ist; wobei die Zwischenschicht aus Rh und einem Trägermaterial für das Rh besteht, wobei das Trägermaterial für das Rh zumindest eine Art ausgewählt aus der Gruppe ist, die aus CeO₂, ZrO₂ und Ce sowie Zr enthaltenden Komplexoxiden besteht, wobei die Zwischenschicht dazu ausgelegt ist, NOx zu reduzieren, wobei eine Beladungsmenge des Rh 1g/L bis 20g/L pro Volumeneinheit des Trägers für den Katalysator (11) ist,
wobei die erste Katalysatorschicht, die Zwischenschicht und die zweite Katalysatorschicht in dieser Reihenfolge aneinander angeordnet sind, so dass im mageren Zustand des Abgases O₂ und NO durch die zweite Katalysatorschicht und die Zwischenschicht hindurchtreten, um die erste Katalysatorschicht zu erreichen,
wobei eine Gesamtbeladungsmenge der ersten Katalysatorschicht, der zweiten Katalysatorschicht und der Zwischenschicht nicht mehr als 450g/L pro Volumeneinheit des Trägers für den Katalysator (11) ist, und
wobei die Beladungsmenge der ersten Katalysatorschicht 50g/L bis 400g/L ist, eine Beladungsmenge der zweiten Katalysatorschicht 10g/L bis 100g/L ist und eine Beladungsmenge der Zwischenschicht 10g/L bis 100g/L pro Volumeneinheit des Trägers für den Katalysator (11) ist.

2. Abgasreinigungsvorrichtung (10), die einen Abgasreinigungskatalysator (11) nach Anspruch 1 aufweist, der in einem Abgaskanal (2) eines Verbrennungsmotors (1) vorzusehen und dazu ausgelegt ist, durch periodisches Ändern eines Luft- /Kraftstoffverhältnisses vom Abgas des Verbrennungsmotors (1) zum mageren Zustand und stöchiometrischen Zustand oder fetten Zustand NOx zu reinigen.

3. Abgasreinigungsvorrichtung (10) nach Anspruch 2, die ferner ein SOx-Beseitigungsmittel (12) zum Beseitigen von im ersten Katalysator gefangenem SOx von dem Abgasreinigungskatalysator (11) aufweist, durch bewirken, dass der Abgasreinigungskatalysator (11) die Temperatur bis zu einer vorbestimmten Temperatur von wenigstens 650°C anhebt.

## Revendications

1. Catalyseur de purification des gaz d'échappement (11) devant être placé dans un conduit d'échappement (2) d'un moteur à combustion interne (1) qui piège les NOx dans l'échappement quand un rapport air/carburant de l'échappement est à l'état appauvri, et qui est adapté à libérer et à purifier par réduction les NOx ainsi piégés quand le rapport air/carburant de l'échappement est à l'état stoechiométrique ou à l'état enrichi, le catalyseur (11) se composant de :
une première couche de catalyseur formée en contact direct avec un support pour le catalyseur (11), la première couche de catalyseur se composant de Pt et d'un matériau support pour le Pt, où la première couche de catalyseur est adaptée à piéger les NOx, où le matériau support pour le Pt est au moins d'un type choisi dans le groupe se composant de CeO₂, ZrO2, Al₂O₃ et des oxydes complexes incluant Ce et Zr, où une quantité de chargement du Pt est de 0,1 g/litre à 20 g/litre par unité volumique du support pour le catalyseur (11) ;
une seconde couche de catalyseur se composant d'au moins un type de zéolite choisi dans le groupe se composant de la zéolite de type bêta, de la zéolite de type MFI, de la zéolite de type Y, de la zéolite de type SZR, et de la zéolite de type FER et d'un liant inorganique, où la zéolite est une zéolite ayant subi un échange d'ions obtenue en réalisant un traitement d'échange ionique avec au moins un type choisi dans le groupe se composant de H, Fe, Cu, V, Cs et Ag, où la seconde couche de catalyseur est adaptée à piéger le HC ; et
une couche intermédiaire formée entre la première couche de catalyseur et la seconde couche de catalyseur ; la couche intermédiaire se composant de Rh et d'un matériau support pour le Rh, où le matériau support pour le Rh est au moins d'un type choisi dans le groupe se composant de CeO₂, ZrO₂ et des oxydes complexes incluant Ce et Zr, où la couche intermédiaire est adaptée à réduire les NOx, où une quantité de chargement du Rh est de 0,1 g/litre à 20 g/litre par unité volumique du support pour le catalyseur (11),
dans lequel la première couche de catalyseur, la couche intermédiaire et la seconde couche de catalyseur sont disposées les unes sur les autres dans cet ordre, de telle sorte que, à l'état appauvri du gaz d'échappement, O₂ et NO passent à travers la seconde couche de catalyseur et la couche intermédiaire afin d'atteindre la première couche de catalyseur,
dans lequel une quantité de chargement totale de la première couche de catalyseur, de la seconde couche de catalyseur et de la couche intermédiaire n'est pas supérieure à 450 g/litre par unité volumique du support pour le catalyseur (11), et
dans lequel une quantité de chargement de la première couche de catalyseur est de 50 g/litre à 400 g/litre, une quantité de chargement de la seconde couche de catalyseur est de 10 g/litre à 100 g/litre et une quantité de chargement de la couche intermédiaire est de 10 g/litre à 100 g/litre par unité volumique du support pour le catalyseur (11).

2. Appareil de purification des gaz d'échappement (10), comprenant un catalyseur de purification de gaz d'échappement (11) selon la revendication 1 devant être placé dans un conduit d'échappement (2) d'un moteur à combustion interne (1), et qui est adapté à purifier les NOx dans l'échappement en variant périodiquement un rapport air/carburant de l'échappement du moteur à combustion interne (1) entre un état appauvri, et un état stoechiométrique ou enrichi.

3. Appareil de purification des gaz d'échappement (10) selon la revendication 2, comprenant en outre un moyen d'élimination des SOx (12) permettant d'éliminer du catalyseur de purification du gaz d'échappement (11) les SOx piégés dans la première couche de catalyseur en provoquant la hausse de température du catalyseur de purification des gaz d'échappement (11) jusqu'à une température prédéterminée d'au moins 650°C.
